# EUROPEAN PATENT SPECIFICATION

(11) **EP 2 869 433 B1**
(45) Date of publication and mention of the grant of the patent: **21.09.2016**
(21) Application number: 13465505.9
(22) Date of filing: 30.10.2013
(51) Int. Cl.: H02K 1/27, H02K 3/47, H02K 16/04

(54) **Axial flux permanent magnet electrical machine with magnetic flux concentration**
Permanentmagnetisch erregte elektrische Axialflussmaschine mit Flusskonzentration
Machine électrique à flux axial et à aimants permanents avec concentration de flux magnétique

(43) Date of publication of application: 06.05.2015
(73) Proprietor: SC BMEnergy SRL, 400287 Cluj-Napoca (RO); Universitatea Tehnica din Cluj-Napoca, 400114 Cluj-Napoca (RO)
(72) Inventor: Breban, Stefan, 400469 Cluj-Napoca (RO); Mester, Victor, 400287 Cluj-Napoca (RO); Oprea, Claudiu Alexandru, 400645 Cluj-Napoca (RO)

(56) References cited:
- EP-A1- 1 850 454
- EP-A2- 1 544 978
- EP-A2- 1 734 645
- WO-A1-2011/139396
- WO-A2-2010/092403
- JP-A- 2006 166 631
- US-A- 5 955 809
- US-A1- 2006 138 890

## Description

The present invention relates to electrical machines, more particular to an axial-flux permanent magnet machine and most particularly to an axial-flux permanent magnet generator with magnetic flux concentration.

The concept of axial-flux electrical machines is not new. These types of machines are developed since 1970's. With the availability of high strength permanent magnets (PMs), like Neodymium-Iron-Boron (NdFeB), these machines became of high interest especially in low speed - high torque applications, like in-wheel motors or renewable energy power generation, due to brushless configuration and high efficiency.

Permanent magnet axial-flux machines consist of a number of rotor discs and stator discs fitted axially along a shaft. The rotors and stators are separated by an air-gap. The PMs are placed circumferentially round the rotor discs with alternating north and south poles facing the stator.

The stator disc can be made from non-magnetic, non-conducting material or from a laminated magnetic material. The coils are wound on the stator and can be placed in slots or in the air-gap. The winding can be distributed, concentrated or placed toroidally round the iron stator disc.

Patent WO2005/119886A2 presents a comprehensive state of the art on these types of machines and an innovation regarding the windings that are recessed into a surface of the stator or rotor disc. Patents WO2010/092403A2, EP1734645A2 and EP1544978A2 present different topologies of axial-flux permanent magnet machines, but share a common rotor (rotors) design: they have a plurality of PMs mounted radially, with alternating circumferential magnetization and intercalated with magnetic poles.

Due to the fact that on conventional permanent magnet axial flux machines the PMs are placed circumferentially round the rotor discs with alternating north and south poles facing the stator, the air-gap magnetic flux is limited to that imposed by the PMs. Thus, to obtain a high magnetic flux density in the air-gap, it is necessary to use rare-earth PMs like Samarium-Cobalt or NdFeB. Rare-earth PMs are many times more expensive in comparison to ferrite PMs. But ferrite PMs have a lower magnetic remanence, thus to obtain the same machine output power, the ferrite permanent magnet axial flux machine should have an increased radius, leading to increased costs on other components, higher mass and volume.

The present invention provides a rotor structure where the PMs are mounted radially onto a rotor wheel and intercalated with the magnetic poles. Also, the PMs are mounted considering an alternating circumferential magnetization (NS - SN - NS arrangement), for each rotor disc. This arrangement allows the concentration of the magnetic flux into the magnetic poles. The advantages of this rotor structure over the conventional ones are:
1. The flux density in the magnetic poles is higher than in the PMs, thus cheaper with lower magnetic remanence PMs can be used;
2. To increase the magnetic flux density, the axial length of the machine could be increased instead of the radius length;
3. If rare-earth PMs are to be used, the machine could be built in a more compact size and lower mass;
4. Allows a better fixation of PMs.

The present invention proposes a solution to reduce the mass (and thus the inertia) of the rotor and also a solution to mount the magnetic poles onto a rotor wheel.

Another purpose of the invention is to achieve an electrical machine with low construction cost, lower volume and mass, robustness and high efficiency.

The present invention is an axial flux permanent magnet electrical machine with magnetic flux concentration as defined in the independent claims 1 and 2. Further embodiments of the invention are defined in dependent claims 3 - 9.

Embodiments of the invention will now be described, by way of example only, with reference to the accompanying drawings in which:
Fig. 1 (prior art) shows the active parts of a two solidary rotors - one stator axial-flux permanent magnet machine with magnetic flux concentration of one embodiment of the present invention;
Fig. 2 (prior art) is an exploded perspective view of an axial-flux permanent magnet machine with magnetic flux concentration;
Fig. 3 illustrates the rotor with parallelepiped shape PMs and carved magnetic poles;
Fig. 4 illustrates an example of segmented rotor construction;
Fig. 5 illustrates another view of the segmented rotor made of several parts;
Fig. 6 illustrates the magnetic pole mounting system for a segmented rotor construction;
Figs. 7, 8 illustrate the form of the magnetic pole for a segmented rotor construction;
Fig. 9 illustrates an example of axial flux machine construction.

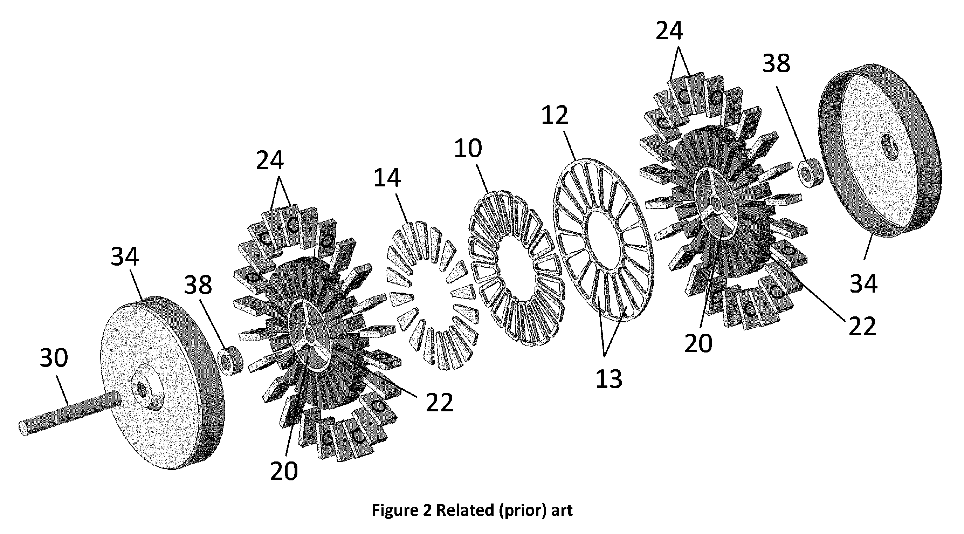

In a preferred embodiment (illustrated in Fig. 2), the machine has two rotor wheels **20** that support the magnetic poles **22** and the PMs **24.** The rotor wheels **20,** the magnetic poles **22** and the PMs **24** are mounted solidary on a shaft **30** to form two rotor discs, aligned one to the other, that rotate solidary. The stator, placed in-between the two rotor discs, is composed of a plurality of discrete windings **10** mounted on a stator outer windings support **12** and on a stator inner windings support **14.** The stator outer windings support **12** is fixed between two housings **34** who support the shaft **30** by intermediate of bearings **38.** The stator outer windings support **12** is provided with a plurality of hollow spaces **13** in which the discrete windings **10** are mounted.

The rotor wheels **20** could have any suitable form and could be made of any material that withstand the forces to which are subjected. Preferably, the rotor wheels **20** should be made from a non-magnetic material to reduce the magnetic flux leakage. Optionally, the rotor wheels **20** and the magnetic poles **22** are cast in one piece from a magnetic material. This should reduce the production costs and increase the rotor robustness.

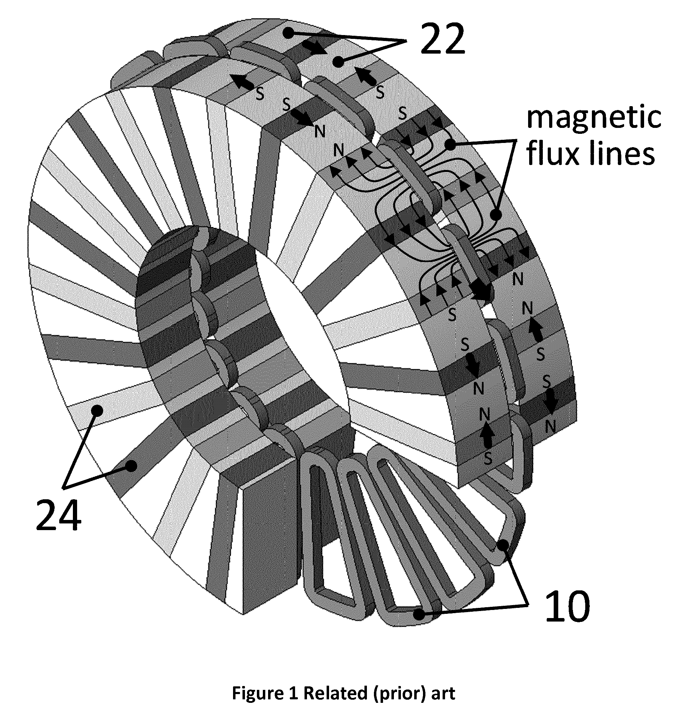

The PMs **24** are mounted radially onto the rotor wheels **20** and intercalated with the magnetic poles **22.** Also, the PMs are mounted considering an alternating circumferential magnetization (NS - SN - NS arrangement), for each rotor disc (as seen in Fig. 1). This arrangement allows the concentration of the magnetic flux into the magnetic poles **22.** The two rotor discs are aligned so that each PM with a NS circumferential magnetization, from one of the rotor discs, faces a PM with a SN circumferential magnetization on the other rotor disc, and vice versa (as seen in Fig.1). In this way, the magnetic flux lines are closing between the magnetic poles **22** of the rotor discs as illustrated in Fig.1. Although rectangular parallelepiped magnets are shown, they could have any other suitable form. Consequently, the magnetic poles **22** are placed between adjacent PMs **24.** The PMs **24** can be held in place by magnetic attractive forces, or can be glued to the magnetic poles **22** and/or to one of the rotor wheels **20,** or can be fixed using an outside strap.

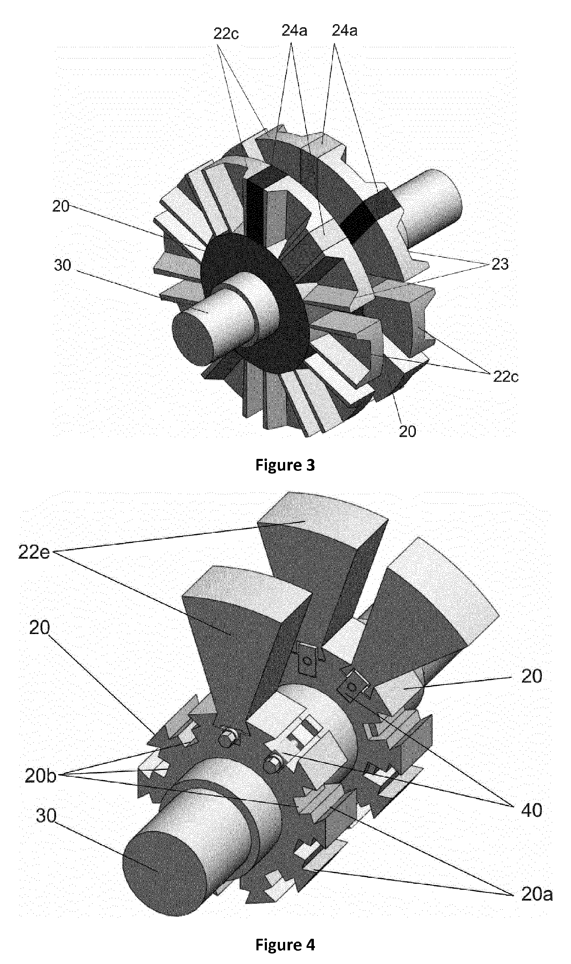

In an example of rotor construction, the magnetic poles **22c** are carved, creating a hollow space **23** on the opposite of the air-gap side, in order to reduce the quantity of material used and to diminish the flux linkage (Fig. 3).

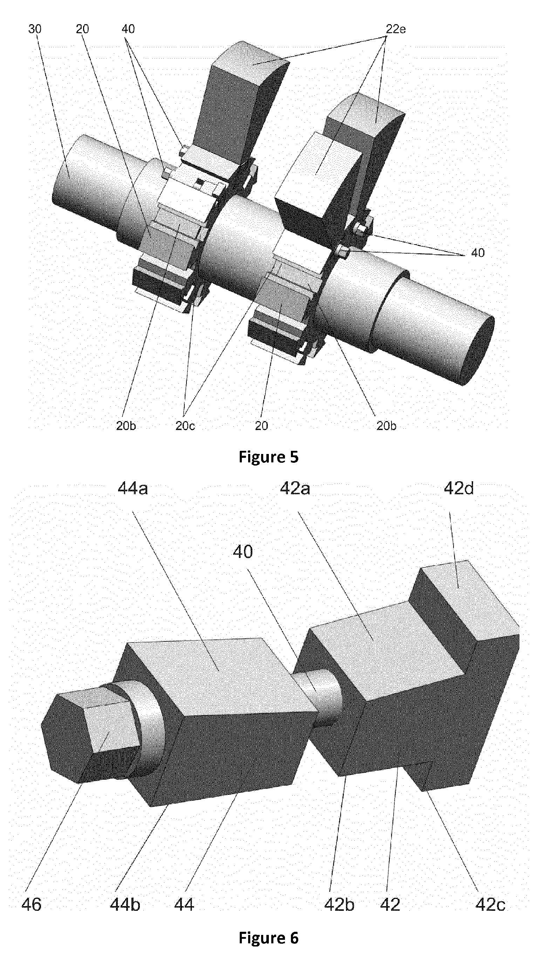

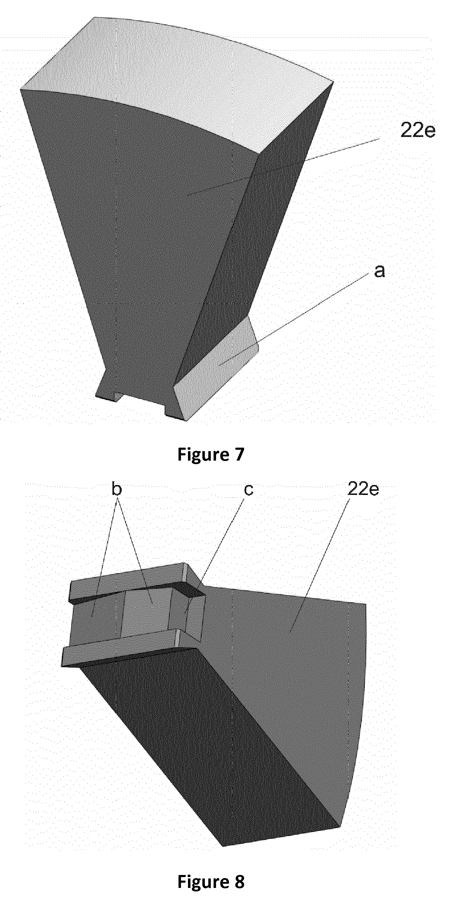

In another example of rotor segmented construction (Figs. 4-8), each of the magnetic poles **22e** are fixed to the rotor wheel **20** by a mounting system **40.** The wheels **20** are provided with dovetail channels **20a,** rectangular channels **20b** and hollows **20c** (Fig. 5). The mounting system **40** (Fig. 6) comprises a retaining part **42,** with a threaded hole, a clamping part **44** and a screw **46.** The parts **42** and **44** are mounted in the channel **20b** with bevelled surfaces **42a, 44a** outwards and inward with the bases surfaces **42b** and **44b.** The hollow space **20c** serves to block the retaining part **42** on the **42c** protuberance. Each magnetic pole **22e** is mounted in dovetail channel **20a** with the same dovetail part **a.** The blocking of the magnetic poles is done by tightening in the dovetail channels due to the forces that appear on the bevelled surfaces **b,** respectively **42a** and **44a.** The clamping force is done by the closing of the clamping part **44** to the retaining part **42** with the screw **46.** The axial alignment of the magnetic poles **22e** (Figs. 7, 8) is done using the protuberance **42d,** of the retaining part **42,** which enters in the channel c of the magnetic pole **22e.**

The windings **10** are made from conducting material (e.g. copper, aluminium) wires with insulation. Trapezium cross section windings **10** are used in the preferred embodiment (Fig. 2) corresponding to the trapezium magnetic poles **22** air-gap face shape. However, if other magnetic poles **22** shape is used, the windings **10** should have the same cross section form.

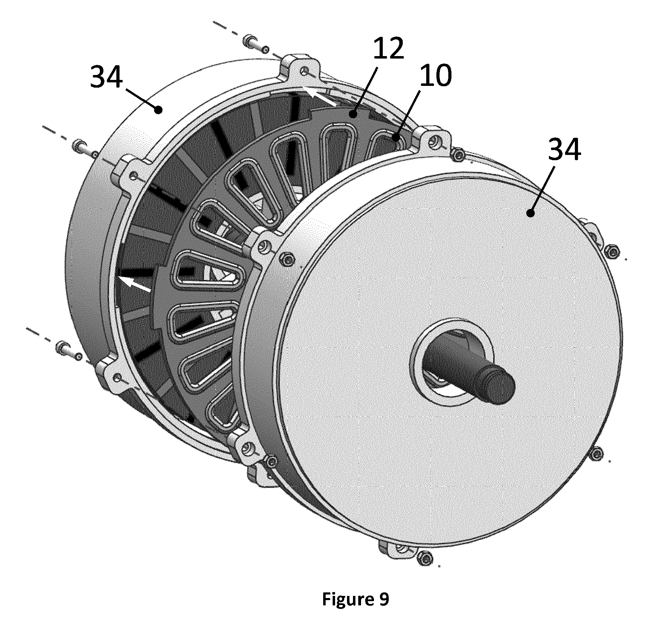

The stator outer windings support **12** surrounds the outer part of the windings (Fig. 9), is made (casted) from non-magnetic, non-conducting material (resin) and has the role to secure the windings in place between the two rotor discs.

In an example of axial flux machine construction (Fig. 9), the stator outer windings support **12** is fixed between two housings **34.** The advantages of this construction are that the mounting of the stator is done without using supplementary fixing elements and the distance between each rotor and stator is kept constant.

The stator inner windings support **14** could be made from non-magnetic, non-conducting material (e.g. plastic, resin) in order to further reinforce the windings, or could be made of a material with magnetic properties (e.g. laminated steel, soft magnetic composite, soft magnetic mouldable composite). If a magnetic material is used, the magnetic flux produced by the PMs is concentrated and directed through the coils. The stator inner windings support **14** could also not be used, leaving the inner space of the windings filled with air (Fig. 9). The stator inner windings support **14** can also form a common part with the stator outer winding support **12** thus completely surrounding the windings for a better fixation. In this case the stator inner windings support **14** is made from the same material as the stator outer winding support **12.**

In this example also, there are twenty-four PMs **24** for each of the rotor discs while the stator has eighteen windings **10,** however the number of magnets and windings may vary and the ratio of magnets to windings may also vary and will determine the number of phases and the number of windings per phase.

In the case when installing the machine is difficult or some parts of the rotor or stator are to be replaced in case of failure, the stator and/or rotor could be made in two or more segments.

The above embodiment describes a rotor having a plurality of magnets and a stator that comprises a plurality of windings. However, it is to be appreciated that in an example not being part of the claimed invention, the magnets could be mounted on the stator and that the rotor could be provided with windings.

It is to be recognized that the machine of the invention has a number of different uses. When used as an electrical power generator, the machine can be used with a wind turbine, a water turbine or other types of apparatus.

## Claims

1. Axial flux permanent magnet electrical machine with magnetic flux concentration, comprising at least one stator and at least one rotor coaxial with the stator and mounted to allow rotation relative to the stator, the rotor having a plurality of permanent magnets **(24)** mounted radially, with alternating NS - SN - NS circumferential magnetization and intercalated with magnetic poles **(22),** and the stator, having a plurality of discrete windings **(10),** mounted radially, at equal distance, on a stator outer windings support **(12),** with a plurality of hollow spaces **(13), wherein** the stator outer winding support **(12)** surrounds the outer part of the windings, and on a stator inner windings support **(14), wherein** the magnetic poles **(22c), (22e)** are carved creating a hollow space **(23)** on the opposite of the air-gap side.

2. Axial flux permanent magnet electrical machine with magnetic flux concentration, comprising at least one stator and at least one rotor coaxial with the stator and mounted to allow rotation relative to the stator, the rotor having a plurality of permanent magnets **(24)** mounted radially, with alternating NS - SN - NS circumferential magnetization and intercalated with magnetic poles **(22),** and the stator, having a plurality of discrete windings **(10),** mounted radially, at equal distance, on a stator outer windings support **(12),** with a plurality of hollow spaces **(13), wherein** the outer winding support surrounds the outer part of the windings, and on an inner windings support **(14), wherein** the rotor is of segmented construction and **wherein** each of the magnetic poles **(22e)** is fixed to rotor wheels **(20)** by a mounting system **(40), wherein** said wheels are provided with dovetail channels **(20a),** rectangular channels **(20b)** and hollow spaces **(20c), wherein** said mounting system **(40)** comprises a retaining part **(42),** a clamping part **(44)** and a screw **(46),** wherein said retaining part **(42)** and clamping part **(44)** are mounted in said rectangular channel **(20b),** to fix the magnetic poles **(22e)** by tightening in the dovetail channels **(20a)** due to the forces that appear on beveled surfaces **(b)** of the magnetic poles **(22e),** respectively on beveled surfaces **(42a)** and **(44a)** of the retaining part **(42)** and clamping part **(44),** done by the closing of the clamping part **(44)** to the retaining part **(42)** with the screw **(46), wherein** the axial alignment of the magnetic poles **(22e)** is done using protuberances **(42c)** of the retaining part **(42)** that enter in hollow spaces **(20c)** of the rotor wheels **(20)** and protuberances **(42d)** of the retaining part **(42)** that enter in channels **(c)** of the magnetic poles **(22e).**

3. Axial flux permanent magnet electrical machine with magnetic flux concentration, as claimed in claims 1 and 2, **wherein,** when using more than one rotor, the rotor discs are aligned so that each permanent magnet with a NS circumferential magnetization, from one of the rotor discs, faces a permanent magnet with a SN circumferential magnetization on the neighboring rotor disc and vice versa.

4. Axial flux permanent magnet electrical machine with magnetic flux concentration, as claimed in claim 1, **wherein,** the wheels **(20)** and the afferent magnetic poles **(22)** are formed in one piece from a magnetic material.

5. Axial flux permanent magnet electrical machine with magnetic flux concentration, as claimed in claims 1 and 2, **wherein,** the rotor wheel **(20)** is formed from a non-magnetic material and the magnetic poles **(22),** are made from a magnetic material.

6. Axial flux permanent magnet electrical machine with magnetic flux concentration, as claimed in claims 1 and 2, **wherein,** the PMs **(24)** are held between magnetic poles **(22),** by magnetic attractive forces, glued or using an outside strap or a combination between these possibilities.

7. Axial flux permanent magnet electrical machine with magnetic flux concentration, as claimed in claims 1 and 2, **wherein,** the stator outer windings support **(12)** and stator inner windings support **(14)** are formed, separately or in one piece, from non-magnetic, non-conducting material.

8. Axial flux permanent magnet electrical machine with magnetic flux concentration, as claimed in claims 1 and 2, **wherein,** the stator inner windings support **(14)** is formed from a material with magnetic properties as iron or laminated steel or soft magnetic composite or soft mouldable magnetic composite or a combination between these materials.

9. Axial flux permanent magnet electrical machine with magnetic flux concentration, as claimed in claims 1 and 2, **wherein,** the stator outer windings support **(12)** is fixed between the housings **(34).**

## Patentansprüche

1. Permanentmagnetisch erregte elektrische Axialflussmaschine mit Flusskonzentration, welches sich mindestens aus einem Stator und mindestens einem Koaxilrotor mit dem Stator zusammensetzt und es ist montiert damit es eine Drehbewegung relative zum Stator ermöglicht. Der Rotor besteht aus einer Vielzahl von Permanentmagneten **(24)** die radial montiert sind und über eine alternierende Umfangsmagnetisierung von NS - SN - NS, mit interkalierten Magnetpolen **(22),** verfügen. Der Stator besteht aus einer Mehrzahl von abgesonderten Spulen **(10),** die radial, im gleichen Abstand auf einem externen Spulenträger **(12)** montiert sind, welche über eine Vielzahl von Hohlräumen verfügt **(13),** wobei der Stator externe Spulenträger **(12)** den äußeren Teil der Spulen umgibt und auf dem internen Spulenträger **(14)** befinden sich die Magnetpolen **(22c), (22e)** welche geschnitzt sind um einen Hohlraum **(23)** auf der gegenüberliegenden Luftspaltseite zu erschaffen.

2. Permanentmagnetisch erregte elektrische Axialflussmaschine mit Flusskonzentration, welches sich mindestens aus einem Stator und einem Koaxialrotor mit dem Stator zusammensetzt und es ist montiert damit es eine Drehbewegung relative zum Stator ermöglicht. Der Rotor besteht aus einer Vielzahl von Permanentmagneten **(24)** welche radial montiert sind und über eine alternierende Umfangsmagnetisierung von NS - SN - NS, mit interkalierten Magnetpolen **(22)** verfügen. Der Stator besteht aus einer Mehrzahl von gesonderten Spulen **(10),** die radial, im gleichen Abstand auf einem externen Spulenträger **(12)** montiert sind, welches über eine Vielzahl von Hohlräumen verfügt **(13),** wobei der äußere Spulenträger die äußere Seite der Spulen umfasst und auf einem inneren Spulenträger **(14),** der Rotor über eine segmentierte Konstruktion verfügt, wo jedes der Magnetpolen **(22e),** mit Hilfe eines Befestigungssystems **(40),** auf Rotorräder **(20),** montiert ist. Die oben genannten Rotorräder sind mit Schwalbenschwanzkanälen **(20a),** rechteckigen Kanälen **(20b)** und Hohlräumen **(20c)** versehen. Das Befestigungssystem **(40)** umfasst einen Halteteil **(42),** einen Klemmteil **(44)** und eine Schraube **(46),** wobei das genannte Halteteil **(42)** und Klemmteil **(44)** in dem rechteckigen Kanal montiert sind **(20b)** um die Magnetpolen **(22e),** mittels Verschärfungen in den Schwalbenschwanzkanälen **(20a),** zu befestigen, die aufgrund der Kräfte, welche auf der abgeschrägten Oberflächen **(b)** der Magnetpolen auftauchen **(22e),** beziehungsweise auf den abgeschrägten Oberflächen **(42a)** und **(44a)** der Halteteile **(42)** und Klemmteile **(44),** die während dem Zusammenschließen des Klemmteiles **(44)** an dem Halteteil **(42),** mit Hilfe der Schraube **(46),** auftauchen. Die **axiale** Ausrichtung der Magnetpolen **(22e)** wird mithilfe von Protuberanzen **(42c)** des Halteteils **(42)** durchgeführt, welche in die Hohlräume **(20c)** der Rotorräder **(20)** eintreten und mittels Protuberanzen **(42d)** des Halteteils **(42)** die in den Kanälen **(c)** der Magnetpolen **(22e)** eindringen.

3. Permanentmagnetisch erregte elektrische Axialflussmaschine mit Flusskonzentration, gemäß Ansprüchen 1 und 2, wobei, wenn mehr als ein Rotor verwendet wird, werden die Rotorscheiben so ausgerichtet, dass sich jeder Permanentmagnet mit einer Umfangsmagnetisierung von NS, von einer der Rotorscheiben, einen Permanentmagneten mit einer Umfangsmagnetisierung von SN auf der benachbarten Rotorscheibe gegenübersteht und umgekehrt.

4. Permanentmagnetisch erregte elektrische Axialflussmaschine mit Flusskonzentration, gemäß Anspruch 1, wobei die Räder **(20)** und die dazugehörigen Magnetpolen **(22)** in einem Teil aus einem Magnetwerkstoff geformt sind.

5. Permanentmagnetisch erregte elektrische Axialflussmaschine mit Flusskonzentration, gemäß Ansprüchen 1 und 2, wobei das Rotorrad **(20)** aus einem nicht magnetischen Material geformt ist und die Magnetpolen **(22)** aus einem Magnetwerkstoff geschaffen sind.

6. Permanentmagnetisch erregte elektrische Axialflussmaschine mit Flusskonzentration, gemäß Ansprüchen 1 und 2, wobei die Permanentmagneten **(24)** zwischen Magnetpolen **(22)** befestigt sind mithilfe von magnetischen Anziehungskräften, verklebt oder mithilfe eines äußeren Gurtes oder mittels einer Kombination zwischen den oben genannten Möglichkeiten.

7. Permanentmagnetisch erregte elektrische Axialflussmaschine mit Flusskonzentration, gemäß Ansprüchen 1 und 2, wobei der äußere Spulenträger **(12)** und der innere Spulenträger **(14)** aus nicht magnetischem, nicht leitfähigem Material, in einem Teil oder separat, geformt sind.

8. Permanentmagnetisch erregte elektrische Axialflussmaschine mit Flusskonzentration, gemäß Ansprüchen 1 und 2, wobei der innere Spulenträger **(14)** aus einem Material geformt ist, das über magnetische Eigenschaften verfügt, wie z.B. Eisen oder laminierter Stahl oder ein weichmagnetischer Verbund oder ein weicher formbarer magnetischer Verbund oder eine Kombination zwischen diesen Materialien.

9. Permanentmagnetisch erregte elektrische Axialflussmaschine mit Flusskonzentration, gemäß Ansprüchen 1 und 2, wobei der äußere Spulenträger **(12)** zwischen den Gehäusen **(34)** fixiert ist.

## Revendications

1. Machine électrique à flux axial et à aimants permanents avec concentration de flux magnétique, comprenant au moins un stator et au moins un rotor coaxial avec le stator et monté pour permettre la rotation par rapport au stator, le rotor présentant une pluralité d'aimants permanents **(24)** montés radialement, avec une alternance NS - SN - NS de l'aimantation circonférentielle et intercalés avec des pôles magnétiques **(22),** et le stator présentant une pluralité d'enroulements séparés **(10),** monté radialement, à distance égale, sur un support statorique extérieur aux enroulements **(12),** avec une pluralité d'espaces creux **(13), caractérisé en ce que** le support statorique extérieur aux enroulements **(12)** entoure la partie extérieure des enroulements, et sur un support statorique intérieur aux enroulements **(14),** aussi **caractérisé en ce que** les pôles magnétiques **(22c), (22e)** sont creusés en créant un espace creux **(23)** sur le côté opposé de l'entrefer.

2. Machine électrique à flux axial et à aimants permanents avec concentration de flux magnétique, comprenant au moins un stator et au moins un rotor coaxial avec le stator et monté pour permettre la rotation par rapport au stator, le rotor présentant une pluralité d'aimants permanents **(24)** montés radialement, avec une alternance NS - SN - NS de l'aimantation circonférentielle et intercalés avec des pôles magnétiques **(22),** et le stator présentant une pluralité d'enroulements séparés **(10),** monté radialement, à distance égale, sur un support statorique extérieur aux enroulements **(12),** avec une pluralité d'espaces creux **(13), caractérisé en ce que** le support statorique extérieur aux enroulements **(12)** entoure la partie extérieure des enroulements, et sur un support statorique intérieur aux enroulements **(14),** aussi **caractérisé en ce que** le rotor est de construction segmentaire et aussi **caractérisé en ce que** chacun des pôles magnétiques **(22e)** est fixé sur les roues de rotor **(20)** par un système de montage **(40),** dans lequel lesdites roues sont munies de canaux en queue d'aronde **(20a),** des canaux rectangulaires **(20b)** et des espaces creux **(20c),** aussi **caractérisé en ce que** ledit système de montage **(40)** comprend une partie de retenue **(42),** une partie de serrage **(44)** et une vis **(46),** dans lequel ladite partie de retenue **(42)** et la partie de serrage **(44)** sont montées dans ledit canal rectangulaire **(20b),** pour fixer les pôles magnétiques **(22e)** en serrant dans les canaux en queue d'aronde **(20a)** dû aux forces qui apparaissent sur les surfaces biseautées **(b)** des pôles magnétiques **(22e),** respectivement sur les surfaces biseautées **(42a)** et **(44a)** de la partie de retenue **(42)** et de la partie de serrage **(44),** accompli par la fermeture de la partie de serrage **(44)** à la partie de retenue **(42)** avec la vis **(46),** aussi **caractérisé en ce que** l'alignement axial des pôles magnétiques **(22e)** se fait à l'aide des protubérances **(42c)** de la partie de retenue **(42)** qui entrent dans les espaces creux **(20c)** des roues du rotor **(20)** et des protubérances **(42d)** de la partie de retenue **(42)** qui entrent dans les canaux **(c)** des pôles magnétiques **(22e).**

3. Machine électrique à flux axial et à aimants permanents avec concentration de flux magnétique, selon les revendications 1 et 2, **caractérisé en ce que** lors que plus d'un rotor est utilisé, les disques du rotor sont alignées de telle sorte que chaque aimant permanent avec une aimantation circonférentielle NS, de l'un des disques du rotor, correspond à un aimant permanent avec une aimantation circonférentielle SN sur le disque du rotor adjacent, et vice versa.

4. Machine électrique à flux axial et à aimants permanents avec concentration de flux magnétique, selon la revendication 1, **caractérisé en ce que** les roues **(20)** et les pôles magnétiques afférents **(22)** forment une seule pièce à partir d'un matériau magnétique.

5. Machine électrique à flux axial et à aimants permanents avec concentration de flux magnétique, selon les revendications 1 et 2, **caractérisé en ce que** la roue du rotor **(20)** est formé à partir d'un matériau non magnétique et les pôles magnétiques **(22),** sont formés à partir d'un matériau magnétique.

6. Machine électrique à flux axial et à aimants permanents avec concentration de flux magnétique, selon les revendications 1 et 2, **caractérisé en ce que** les aimants permanents **(24)** sont fixés entre les pôles magnétiques **(22),** par des forces d'attractions magnétiques, collés ou en utilisant un bracelet extérieur ou une combinaison de ces possibilités.

7. Machine électrique à flux axial et à aimants permanents avec concentration de flux magnétique, selon les revendications 1 et 2, **caractérisé en ce que** le support statorique extérieur aux enroulements **(12)** et le support statorique intérieur aux enroulements **(14)** sont formés séparément ou en une seule pièce à partir d'un matériau non-magnétique et non-conducteur.

8. Machine électrique à flux axial et à aimants permanents avec concentration de flux magnétique, selon les revendications 1 et 2, **caractérisé en ce que** le support statorique intérieur des enroulements **(14)** est formé à partir d'un matériau ayant des propriétés magnétiques comme le fer ou l'acier laminé ou d'un matériau composite magnétiquement doux ou d'un matériau composite moulable magnétiquement doux, ou d'une combinaison de ces matériaux.

9. Machine électrique à flux axial et à aimants permanents avec concentration de flux magnétique, selon les revendications 1 et 2, **caractérisé en ce que** le support statorique extérieur aux enroulements **(12)** est fixé entre les carcasses **(34).**
